# EUROPEAN PATENT SPECIFICATION

(11) **EP 1 549 025 B1**
(45) Date of publication and mention of the grant of the patent: **16.04.2008**
(21) Application number: 04030309.1
(22) Date of filing: 21.12.2004
(51) Int. Cl.: H04L 29/08, G06F 17/30, G06Q 10/00, G06Q 30/00

(54) **System and method for supplying information from live experts to users in real time**
System und Verfahren zur Echtzeitmitteilung von Informationen von Experten zu Benutzern
Système et procédé pour la fourniture d'informations en temps réel depuis des experts vers des utilisateurs

(30) Priority: 23.12.2003 US 745274
(43) Date of publication of application: 29.06.2005
(73) Proprietor: Symbol Technologies, Inc., Holtsville, New York 11742-1300 (US)
(72) Inventor: Llamas, Luis, Manorville New York 11949 (US); Milosavljevic, Jovan, Staten Island New York 10314 (US); Ubriaco, Charles P., Northport, New York 11768 (US)
(74) Representative: Maiwald Patentanwalts GmbH

(56) References cited:
- WO-A-01/35272
- US-A- 5 958 014
- US-A1- 2002 133 388
- US-A1- 2003 140 037

## Description

### Technical Field

The present invention relates to systems and methods for supplying a user with information, and more particularly to a network environment that allows a user access to real time skill based information from a live expert.

### Background of the Invention

As computers become more powerful and less expensive, the amount and variety of information available to users continues to grow. Increasing computing power has enabled the development of more sophisticated systems that extend the utility of computers beyond researchers and scientists to the average user seeking information. Accordingly, in our modem, fast-paced society, consumers are increasingly relying on search information and retrieval systems that enable users to find desired information relating to a topic. From Web search engines to desktop application utilities (*e.g.*, help systems), users consistently employ information and retrieval systems to discover unknown information about topics of interest. In some cases, these topics are prearranged into topic and subtopic areas. Nonetheless, the exponential growth of information available using such networks, makes it increasingly more difficult for a user to locate a manageable amount of information which is pertinent to a particular request.

Generally, to facilitate locating relevant information, information retrieval (IR) systems have been developed that allow users to identify particular documents of interest from among a larger number of documents. Such IR systems are typically useful for finding a topic in a network environment, such as a news document in a broadcast repository, or a particular web site on the worldwide web. To use such systems, the user specifies a query containing several words or phrases specifying areas of interest, and the system then retrieves documents it determines may satisfy the query.

An IR system typically ranks documents with some measure (e.g., score) by the likelihood of relevance to a query. The ranking order is useful in determining whether one document is more relevant than another. Some search applications have the selection of relevant documents as their final goals, and a ranking order by itself does not provide an indication of whether a document is actually relevant to the query. A large number of documents that are low on the ranking order invariably are provided as a result of the query, despite the fact that these documents probably are not very relevant.

At the same time, typically information explosion has undermined a user's ability to quickly and accurately locate, retrieve and decipher gathered information. To assist overwhelmed users in locating and retrieving specific useful information, there is continuous demand for implementation of systems that can provide real-time information about an item, by talking to live human operators and/or experts in a particular field. However, such delivery of real-time skill based information in part depends on readiness and availability of experts to respond to user's requests at specific periods, or at random times. Accordingly, a user who seeks information about a particular topic can not typically be assured access to a human expert on the required subject, at a specific time.

For example, conventional switch boards that include a fair amount of computer processing power, memory, and interface hardware, may connect a user's request to an appropriate extension of an expert, but the expert may not be available at the particular moment the information is requested by a user of such system. In addition, conventional switching board techniques are subject to numerous practical constraints such as that during off-peak times, substantial numbers of the systems resources may remain idle. Even during periods of peak demand for expert services, at least some operator workstations will normally be idle due to unexpected expert absences or because additional workstations are normally provided in the event that some workstations become unusable due to hardware failures. Thus, many conventional operator workstations go unused during significant portions of a day.

US 2002/133388 A1 discloses a method of or apparatus for facilitating the delivery of advice to consumers using a server unit, which may store and display the names and characteristics of experts and then rapidly assist in connecting the expert and consumer for real-time communication.

WO 01/35272 A2 discloses a method and system for online, real-time interface of users and appropriate experts through a network of computers such as the Internet.

US 5 958 014 discloses a system and method for establishing a data connection between a computer and a live agent selected from an agent pool.

Therefore, there is a need to overcome the aforementioned deficiencies associated with conventional devices.

### Summary of the Invention

The following presents a simplified summary of the invention in order to provide a basic understanding of one or more aspects of the invention. This summary is not an extensive overview of the invention. Rather, the sole purpose of this summary is to present some concepts of the invention in a simplified form as a prelude to the more detailed description that is presented hereinafter.

The object of the present invention is achieved by providing a system for providing real-time information to a user and a method for obtaining real-time information according to the independent claims.

The present invention provides for systems and methods of supplying a user with real time skill based information from a live expert, on or about a moment in time that the user seeks the desired information. Such a methodology generally ensures a user's access to information in real time by establishing a communication channel to an expert in the desired field, approximately within a time duration wherein particular information is being sought.

According to one aspect of the present invention, experts on various subjects (e.g. topics/ products), and users requiring related information are logged on to a network environment. Such system can be assigned identifiers with authentication components to check the identity of users and experts who attempt to connect to the network environment. The experts can be grouped via respective skill sets, and identified to users seeking information in those areas of expertise. Thus, upon a match between a user's information request, with an area of expertise, the available expert is identified to the user via the network, and the user can then contact the expert via the network, or through other suitable communication methods, and obtain real time expert advice on the requested topic.

According to a related aspect of the present invention, a mobile user of such system is equipped with a data terminal with data capture capabilities, and connects to the network, wherein individual experts are also logged on. Data related to the subject is collected by the mobile terminal via its data capture component, and/or inputted by the user. Subsequently, a query is generated and submitted to a host computer, which is connected to a network environment. The system then finds the expert with the desired skill set, and connects the user for real time communication with that expert. Alternatively, the system provides pertinent information for the expert such as; contact info, expert's preferred method of communication, availability, and the user can then contact the expert through other communication means to obtain additional information. Such real time mobile skill set information system typically ensures real time skill based information delivery to users of the system around the time information on a topic is sought by the user.

In a related aspect of the present invention, users of the system are notified of, and can track down, real time availability of various experts through the network. Experts can also designate an available or preferred mode of communication (*e*.*g*. telephone or e-mail), and provide status identifiers (*e*.*g*. whether the desired expert is currently communicating with another user; will become available within the next few minutes; or will log off the network at a predetermined time.) The system can also assess the status of live experts at any moment. In addition, various search engines operative with the user's data terminal and/or the network host computer can further aid the user of the availability and tracking of a designated expert, management and storage of obtained information, and automatic selection of proper expert. In addition, various experts logged on the network can also communicate with each other and track each other's availability, to provide the most accurate information to a user.

In accordance with a methodology of the present invention, a user logs on to the network to obtain expert information on a subject. Next, the user captures/enters data associated with the subject *via* the data terminal's various data entry/capture modes, such as bar code scanning, image capture camera, radio frequency identification (RFID), bar code decoding imager, manual input feature and the like.

Subsequently, the user is presented with a list of experts currently logged on the network who are capable of providing the desired information. The user can also be provided with additional information such as; whether the experts are currently engaged with other users, availability of the experts at a particular time, approximate wait time to access the experts, and the like. The methodology and system of the present invention can employ various artificial intelligence based schemes for carrying out various aspects thereof, *e.g.*, in connection with sequentially queuing up user's request should an expert not be available immediately, delivery of requests to appropriate experts based on their upcoming availability, choosing most suitable expert and the like. Accordingly, relevant information about the experts (*e.g.* their immediate availability) are provided to the user (*e*.*g*. by audio or visual display). Next, the user can then scroll through the list provided, and initiate real time communication with the suitable expert, either *via* the network, or through other communication means.

In a related aspect of the present invention, monitoring/tracking of a status for experts (*e*.*g*. availability, area of expertise, schedule) is facilitated *via* a network controller. Based on inferences of such controller, the system can then notify an expert not currently logged on to the network to commence log on, and become available as there is an inference that a need can arise. In a related aspect of the present invention, the controller can notify redundant experts on a specific area that they can logoff, as their services are inferred to no longer be required for a particular time frame.

To the accomplishment of the foregoing and related ends, the invention, then, comprises the features hereinafter fully described. The following description and the annexed drawings set forth in detail certain illustrative aspects of the invention. However, these aspects are indicative of but a few of the various ways in which the principles of the invention may be employed. Other aspects, advantages and novel features of the invention will become apparent from the following detailed description of the invention when considered in conjunction with the drawings. To facilitate the reading of the drawings, some of the drawings may not have been drawn to scale from one figure to another or within a given figure.

### Brief Description of the Drawings

Fig. 1 shows an exemplary arrangement of a network system in accordance with an aspect of the present invention.
Fig. 2 illustrates a particular example of a handheld terminal 200 in accordance with an aspect of the present invention.
Fig. 3 illustrates a block diagram of the general operation of the handheld terminal of Fig. 2.
Fig. 4 illustrates an exemplary method of logging on to a network of the present invention.
Fig. 5 illustrates an exemplary flow chart of a methodology according to the present invention.
Fig. 6 is a table of programs and data stored at the host computer and/or a user terminal according to an exemplary aspect of the present invention.
Fig. 7 is another exemplary flow chart according to another aspect of the present invention.

### Detailed Description of the Invention

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

The present invention provides for systems and methods of supplying information *via* live experts to users in real time at a network environment. Accordingly, as used in this application, the terms "component" and "system" are intended to also refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers. It is to be appreciated that filters, subfilters, filter managers, classifiers, models, order groups and other various items are components.

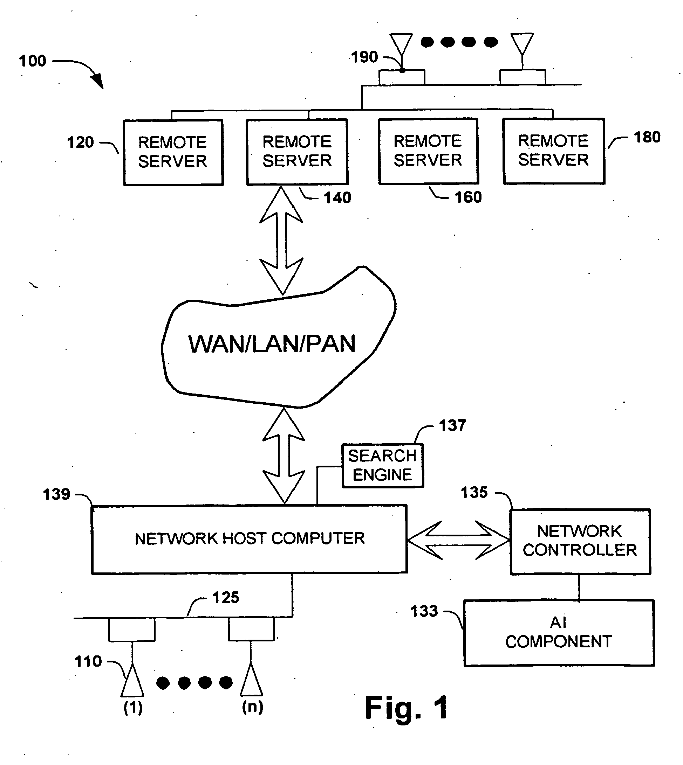

Figure 1 illustrates an exemplary network environment 100 according to the present invention, which includes multiple portable data terminals 110 (n being an integer) employed by various users to access experts on particular subjects. The network system 100 can include public or private local area networks (LAN) and/or wide area network (WAN). For example, for a retail store environment or a hospital, such information network generally can include various user's portable transaction computer or data terminals 110, a wireless local area network including a plurality of access points from remote servers for log on by the experts 190, and a wired backbone 125 for communicating data between remote server and the user's data terminals 110. It is to be appreciated that connection between various components of the system (*e.g.* terminals, network computers, servers, and the like) can be wireless and/or hard wired.

In connection with identifying the required live expert, the subject invention can employ various artificial intelligence based schemes for carrying out various aspects thereof. For example, a process for learning explicitly or implicitly when a specific expert should be contacted, after a data capture event on a topic by a user, can be facilitated *via* an automatic classification system and process. Classification can employ a probabilistic and/or statistical-based analysis (*e*.*g*., factoring into the analysis utilities and costs) to prognose or infer an action that a user desires to be automatically performed. For example, a support vector machine (SVM) classifier can be employed. Other exemplary classification approaches that can also be employed include; Bayesian networks, decision trees, and probabilistic classification models providing different patterns of independence. Classification as used herein also is inclusive of statistical regression that is utilized to develop models of priority. Accordingly, the subject invention can employ classifiers that are explicitly trained (*e*.*g*., *via* a generic training data) as well as implicitly trained (*e*.*g*., *via* observing user behavior, receiving extrinsic information). Thus, the classifier can automatically return an answer to a question based on a predetermined criteria. For example, with respect to SVM's that are well understood, SVM's are configured *via* a learning or training phase within a classifier constructor and feature selection module. A classifier is a function that maps an input attribute vector, x = (x1, x2, x3, x4, *xn*), to a confidence that the input belongs to a class - that is, f(x) = *confidence* (*class*). As depicted in Fig. 1 any number of servers and expert connections 190 can be interconnected on the network 100. The network 100 can employ any network topology and communicate data between the user and the expert using any communication protocol.

According to one exemplary aspect of the present invention, the network system 100 is a world wide computer network, with the web servers 120, 140, 160 located anywhere in the world, and the standard Internet protocols including TCP/IP and HTTP. TCP/IP is a common transport layer protocol used by a worldwide network of computers. HTTP is a known application protocol that provides users access to files (which can be in different formats such as text, graphics, images, sound, video, etc.) using a standard page description language known as Hypertext Markup Language (HTML). Known HTML browsers allow for graphical user interface (GUI) based access to HTML documents accessible on servers communicatively linked to the client. Other type of browser applications (*e.g.* java based, pocket pc, DOS) can also be employed. Additionally, the network environment can employ a system for connecting the user's data terminal to the host computer that includes a modem and RJ II Jack for either a direct telephone line connection to the network host computer or to an internet service provider (not shown) which provides an internet connection to the main host computer.

The hand held terminal(s) 110 (described in detail *infra*) can include an operating system, an access log recorder, an access log recording file and an access or application process, which starts its operation after user's certification process. Upon verification of password, a user can log on to the network 100 to obtain expert information on the product. The hand held terminal 110 includes data capture mechanism(s) such as bar code scanning, image capture camera, radio frequency identification (RFID), bar code decoding imager, manual input feature and the like. Upon a successful data entry associated with a subject (*e*.*g*. product, item) the network host computer 139 receives a link request from the user for a specific product or expert skill associated with the product. Such a request can launch a program on the host computer 139, initiate a search and return contact info for an expert currently logged on the network.

For example, application of the present invention in a retail environment can provide purchasers with real time information *via* a live expert about selected products. A purchaser approaches a salesperson regarding a particular item that is displayed for sale. The salesperson, who may not be familiar with the product, enters information related to the product *via* a data capture feature of the user terminal 110. Subsequently, the user terminal 110 generates a link request and forwards a query to the network host computer 139 that stores programs associated with the system for interacting with the user and the sought after expert. The sales person can then be presented with a list of experts, currently logged on the network and who can provide real time information for that product. Respective contact information and availability of the experts can also be provided to the salesperson user (*e.g.* by audio or visual display). The salesperson can then initiate real time contact with the expert identified by the network to obtain required information for the purchaser. Such contact with the expert is either through the network or other communication channels. This ensures providing real time information on or about the time period the information was sought.

Likewise, a health administrator can have a question regarding a medication for a particular patient. The administrator can data capture the patient's records, (*e.g.* via scanning a bracelet that the patient wears, manually entering the name of the patient in to portable terminal and the like). Such data entry generates a link request to the network host computer, which in turn determines who is the patient's doctor; whether such doctor is currently logged on the network and is ready and able to provide information, and if not who is the alternate contact; and other status identifiers. A network controller 135 with artificial intelligence component 133 can also monitor and/or track state of available experts. Based on an inference of the controller 135, the system can then notify (*e*.*g*. *via* paging) an expert not currently logged on to the network to commence log on, and to be available in case a need arises. As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. The user can then contact the expert through the network communication channels, or through other communication means to obtain required information.

In a related aspect of the present invention, the controller can notify redundant experts of a particular area that they can logoff, as their services are no longer required for a particular time frame. Various search engine(s) 137 operative with the user's data terminal can aid the user as to the availability and tracking of a designated expert, management and storage of obtained information, and automatic selection of proper expert. In another aspect, of the present invention, various experts logged on the network can also communicate with each other and track each other's availability, to provide most accurate information to a user.

In a related example, the network of the present invention can be part of a manufacturing line assembly, which provides real-time information to the production line supervisor. Upon noticing a high rate of failure for an end item, appropriate data associated with that item can be captured (*e.g.* by a barcode scan.) Accordingly, the host computer 139 can provide contact info for the engineer currently logged on the network, who is ready and able to address the situation. The supervisor can then initiate a communication channel with the engineer, and obtain required information in real-time basis.

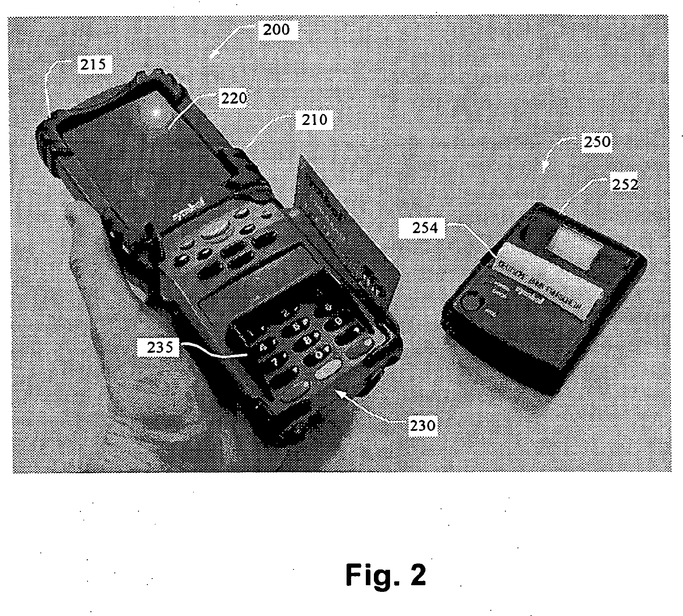

Figure 2 illustrates an example of a handheld terminal 200 in accordance with an aspect of the present invention. The handheld terminal 200 includes a housing 210 which can be constructed from a high strength plastic, metal, or any other suitable material. The handheld terminal 200 includes a display 220. As is conventional, the display 220 functions to display data or other information relating to ordinary operation of the handheld terminal 200 and/or mobile companion (not shown). For example, software operating on the handheld terminal 200 and/or mobile companion may provide for the display of various information requested by the user and answered by the expert, Additionally, the display 220 may display a variety of functions that are executable by the handheld terminal 200 and/or one or more mobile companions. The display 220 provides for graphics based alpha-numerical information such as, for example, the price of an item requested by the user. The display 220 also provides for the display of graphics such as icons representative of particular menu items, for example. The display 220 can also be a touch screen, which may employ capacitive, resistive touch, infrared, surface acoustic wave, or grounded acoustic wave technology.

The handheld terminal 200 further includes user input keys 230 for allowing a user to input information and/or operational commands. The user input keys 230 may include a full alphanumeric keypad, function keys, enter keys, etc. The handheld terminal 200 can also include a magnetic strip reader 240 or other data capture mechanism (not shown). The magnetic strip reader 240 can receive magnetic tags associated with items that a user has a question about from the expert, and/or for accepting store credit cards, etc. as a payment option for providing information. An electronic signature apparatus can also be employed in connection with the magnetic strip reader or a telecheck system.

The handheld terminal 200 can also include a window (not shown) in which a bar code reader/bar coding imager is able to read a bar code label, or the like, presented to the handheld terminal 200. The handheld terminal 200 can include a LED (not shown) that is illuminated to reflect whether the bar code has been properly or improperly read. Alternatively, or additionally, a sound may be emitted from a speaker (not shown) to alert the user that the bar code has been successfully imaged and decoded. The handheld terminal 200 also includes an antenna (not shown) for wireless communication with an RF access point; and an IR transceiver (not shown) for communication with an IR access point.

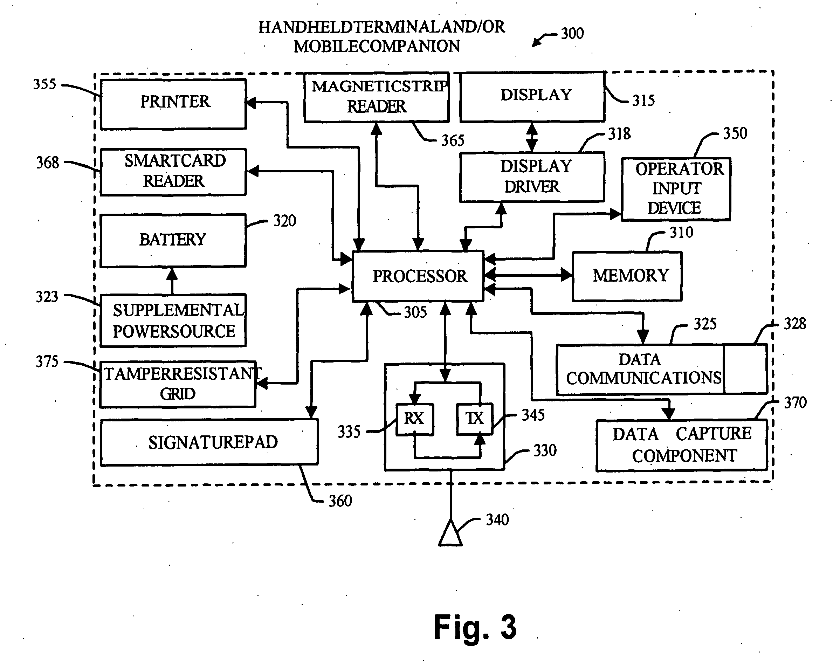

Turning now to Figure 3, a schematic representation according to one aspect of the present invention is shown in which a processor 305 is responsible for controlling the general operation of a handheld terminal and/or mobile companion 300. The processor 305 is programmed to control and operate the various components within the handheld terminal and/or mobile companion 300 in order to carry out the various functions described herein. The processor or CPU 305 can be any of a plurality of suitable processors. The manner in which the processor 305 can be programmed to carry out the functions relating to the present invention will be readily apparent to those having ordinary skill in the art based on the description provided herein.

A memory 310 tied to the processor 305 is also included in the handheld terminal and/or mobile companion 300 and serves to store program code executed by the processor 305 for carrying out operating functions of the handheld terminal and/or mobile companion 300 as described herein. The memory 310 also serves as a storage medium for temporarily storing information such as receipt transaction information and the like. The memory 310 is adapted to store a complete set of the information to be displayed. According to one aspect, the memory 310 has sufficient capacity to store multiple sets of information, and the processor 305 could include a program for alternating or cycling between various sets of display information.

A display 315 is coupled to the processor 305 *via* a display driver system 318. The display 315 may be a liquid crystal display (LCD) or the like. The display 315 functions to display data or other information relating to ordinary operation of the handheld terminal and/or mobile companion 300. For example, the display 315 may display a set of expert contact information, which is displayed to the operator and may be transmitted over a system backbone (not shown). Additionally, the display 315 may display a variety of functions that control the execution of the handheld terminal and/or mobile companion 300. The display 315 is capable of displaying both alphanumeric and graphical characters. Power is provided to the processor 305 and other components forming the handheld terminal and/or mobile companion 300 by at least one battery 320. In the event that the battery(s) 320 fails or becomes disconnected from handheld terminal and/or mobile companion 300, a supplemental power source 323 can be employed to provide power to the processor 305. The handheld terminal and/or mobile companion 300 may enter a minimum current draw of sleep mode upon detection of a battery failure.

The handheld terminal and/or mobile companion 300 includes a communication subsystem 325 that includes a data communication port 328, which is employed to interface the processor 305 with the network *via* the host computer. The handheld terminal and/or mobile companion 300 also optionally includes an RF section 330 connected to the processor 305. The RF section 330 includes an RF receiver 335, which receives RF transmissions from the network for example *via* an antenna 340 and demodulates the signal to obtain digital information modulated therein. The RF section 330 also includes an RF transmitter 345 for transmitting information to a computer on the network, for example, in response to an operator input at a operator input device 350 (*e.g.*, keypad, touch screen) or the completion of a transaction. Peripheral devices, such as a printer 355, signature pad 360, magnetic strip reader 365, and data capture device 370 can also be coupled to the handheld terminal and/or mobile companion 300 through the processor 305. The handheld terminal and/or mobile companion 300 also includes a tamper resistant grid 375 to provide for secure payment transactions. If the handheld terminal and/or mobile companion 300 is employed as payment terminal, it can be loaded with a special operating system. However, if the handheld terminal and/or mobile companion 300 is employed as a general purpose terminal, it can be loaded with a general purpose operating system.

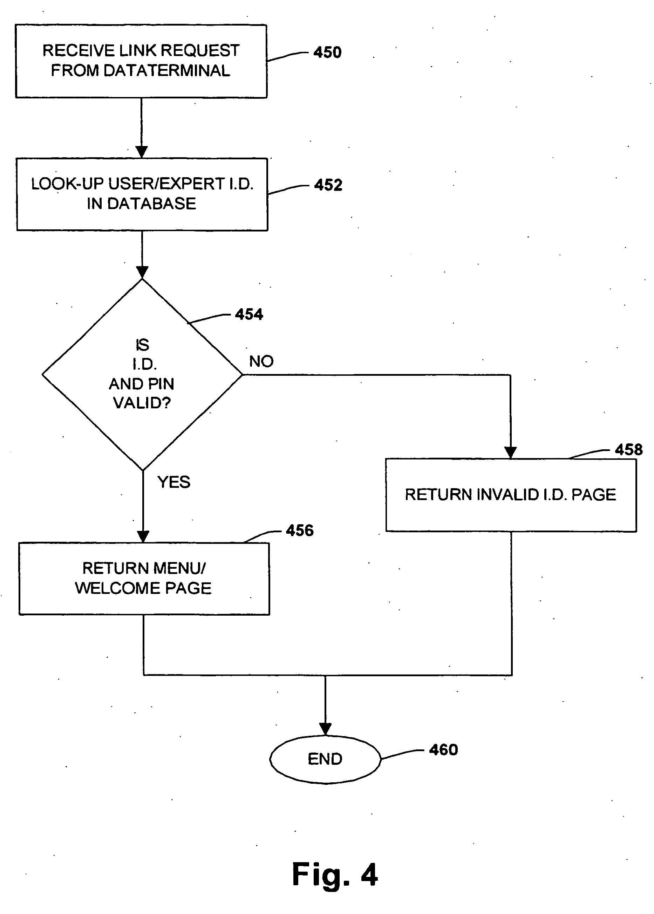

Referring now to Fig. 4, an exemplary method of logging on to the network according to one aspect of the present invention is illustrated. The user attempts to log on to the network, for example, by depressing a button on the portable data terminal (110 of Fig. 1), which causes the terminal to send a link request to the host computer (138 of Fig.1). The link request can include the user ID number, the PIN number and instructions to launch the user verification program. Subsequently, the program starts at step 450 which represents receipt of the link request from the data terminal (110 of Fig. 1). At step 452, the host (138 of Fig. 1) looks up the user ID number in the database, and, at step 454, checks whether the ID number and PIN number combination is valid. If it is valid, the host computer returns a menu page for expert selection or a welcome page to the portable data terminal at step 456. Alternatively, if the number is invalid, the host computer returns an "invalid PIN number" page to the portable terminal at step 458. The program ends at step 460. A similar log on procedure can also be employed by an expert data terminal (190 of Fig.1), which connects to remote servers (120, 140, 160, 180 of Fig. 1)

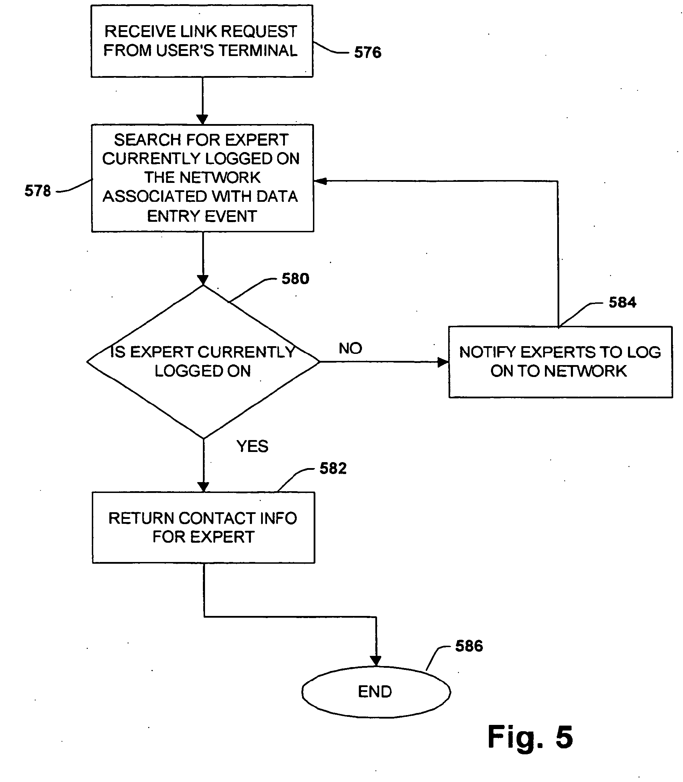

Upon a successful connection to the network environment, the user moves a reader of the data terminal to a dataform associated with the item requiring expert advice. The user activates a suitable selector, such as depressing a trigger to actuate an imaging assembly and an illumination assembly of the reader associated with the hand held terminal. The bar code reading system can be connected to the processor (305 of Fig. 3) through a data connection, such as a serial port which generates a software interrupt when a bar code has been successfully decoded. The interrupt triggers the processor to transmit a barcode link request to the host computer. The barcode link request can be a TCP/IP data packet which includes the decoded data and instructions to the host computer to launch a program on the host. Such program can be activation of a search engine to launch search program (137 of Fig. 1) for an expert at the host computer (138 of Fig.1). Fig. 5 is a flowchart showing such operation. The program starts at step 576 which represents receipt of link request from the user's terminal. At step 578, the system searches the network environment to locate an expert associated with the captured data. At step 580, the system determines whether an expert associated with the particular request is logged on. Typically this will include employing a search engine and looking up the code (*e.g.* UPC) in a list of sorted skill sets to associate with the captured data of the object about which information is sought. If the required expert is currently logged on, the contact info and preferred mode of communication with that expert is returned to the user's terminal at step 582. Alternatively, if the particular expert is not logged on, an alert notification can be sent to experts(s) related to the search request to log on the network, (*e.g.* a pager notification), or an alternate expert will be searched for.

While the exemplary method is illustrated and described herein as a series of blocks representative of various events and/or acts, the present invention is not limited by the illustrated ordering of such blocks. For instance, some acts or events may occur in different orders and/or concurrently with other acts or events, apart from the ordering illustrated herein, in accordance with the invention. In addition, not all illustrated blocks, events or acts, may be required to implement a methodology in accordance with the present invention. Moreover, it will be appreciated that the exemplary method and other methods according to the invention may be implemented in association with the method illustrated and described herein, as well as in association with other systems and apparatus not illustrated or described.

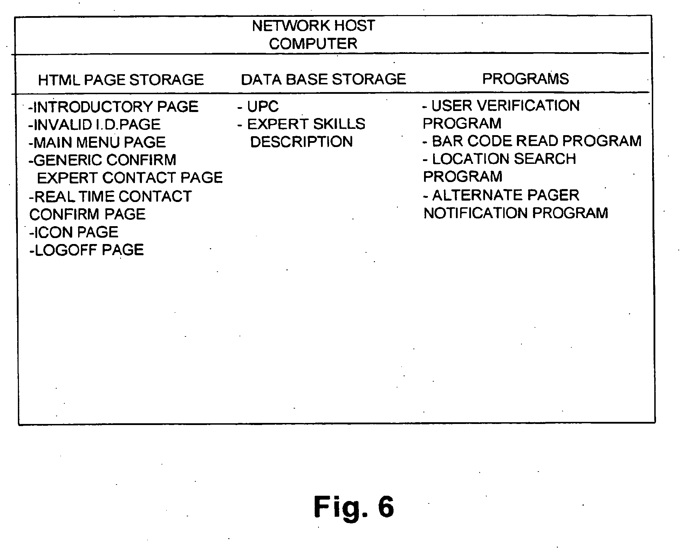

Fig. 6 is a table of a suitable setup of the host network computer (139 of Fig. 1). The host computer includes storage of HTML web pages, databases, and programs launchable by user's terminal link requests. If the host network computer receives a link request from a client for a specific page, the host merely returns the requested page. Alternatively, if the link request launches a program, the host executes the program and returns a page as determined by the program. The user's data terminal typically generates link requests and receives return data. Programs associated with the system for locating the experts are stored and run on the host network program.

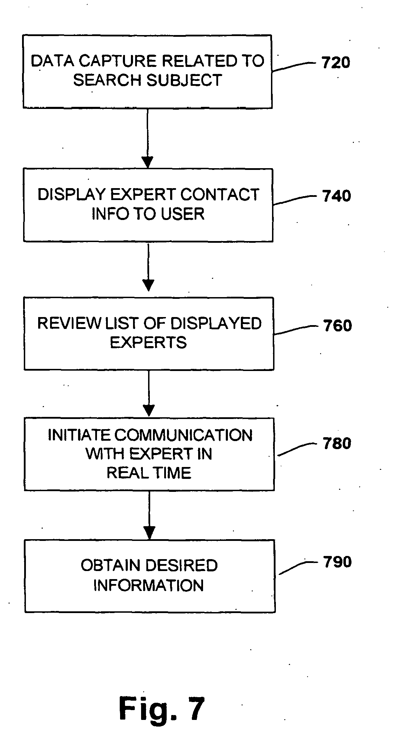

In a related aspect of the present invention, as illustrated in Fig. 7, when the user connects the user terminal (110 of Fig. 1) to the network host computer (139 of Fig. 1) (for example, by submitting a password string provided by the network system to the user as part of the initial, one time registration with the network system 100), and captures data related to the item at 720, the host computer provides various classification categories and their respective selection for the indexed experts, which are displayed at the user terminal, at 740. Subsequently; at 760 the user can review the list of displayed experts associated with the search request and pick the most suitable (*e.g.* based on preferred mode of communication designated by the expert, or availability at a specific time.) At 780, the user can then initiate real time contact with the expert and obtain desired information. Accordingly, it can be ensured that the user will obtain real time information from the experts logged on to the network, on or about the time the user requests assistance of an expert.

Although the invention has been shown and described with respect to certain illustrated aspects, it will be appreciated that equivalent alterations and modifications will occur to others skilled in the art upon the reading and understanding of this specification and the annexed drawings. In particular regard to the various functions performed by the above described components (assemblies, devices, circuits, systems, etc.), the terms (including a reference to a "means") used to describe such components are intended to correspond, unless otherwise indicated, to any component which performs the specified function of the described component (*e.g.*, that is functionally equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention.

## Claims

1. A system for providing real-time information to a user comprising:
input means;
means adapted for assessing status of live experts (190) logged onto a network (100);
means adapted for providing information;
means for tracking the live experts (190) on the network (100) via a network controller (135);
wherein the input means are adapted for inputting a search topic by users, the input means being adapted to interact with a host computer (139) connected to the network (100) with the live experts (190) logged thereon,
wherein the means adapted for providing information are adapted for providing information related to, or received from the live experts (190) of an available status to the user for a real time communication there between; **characterized in that** the system also comprises:
means for notifying an expert (190) to connect to the network (100) based on an inference of the network controller (135).

2. The system of claim 1, further comprising
a user data terminal (110) with a data capture component (370) adapted to receive data about a subject, and
the host computer (139);
wherein the user data terminal (110) is adapted to interact with the host computer(139), and
wherein the host computer (139) is adapted to connect to the network (100), the host computer (139) is adapted to assess status of a live expert (190) on the subject who is logged on to the network (100), and is adapted to provide information related to the expert (190) or received from the expert (190), to the user for a real time communication between the expert (190) and the user.

3. The system of claim 2, the data capture component (370) comprising a bar code reader adapted to scan a data form related to the subject.

4. The system of claim 2, the data capture component (370) comprising an RFID reader.

5. The system of claim 2, the data capture component (370) comprising an image capture camera.

6. The system of claim 2, the user data terminal (110) further comprising a bar code decode imager.

7. The system of claim 2, the user data terminal (110) further comprising a manual input component (350).

8. The system of claim 2 further comprising:
an input device adapted to accept input from the user about a search topic on the subject;
a processor (305) adapted to generate a query related to data about the search topic;
a transceiver adapted to transmit the query and receive the information from the host computer (139); and
a display (220) adapted to display data received from the expert (190) to the user.

9. The system of claim 8, wherein the input device is a keyboard.

10. The system of claim 8, wherein the processor includes a computer program activated by the user.

11. The system of claim 8, the input device comprising a touch panel (350) that allows the user to enter requests or queries.

12. The system of claim 8, the user data terminal (110) further comprising a browser application that is adapted to display information related to the search topic.

13. The system of claim 12, the browser being adapted to employ java or DOS based applications.

14. The system of claim 8, the user data terminal (110) further comprising a printer (355).

15. The system of claim 2, the user data terminal (110) comprising a button allowing the user to transmit a link request to the host computer (139) to launch a search program.

16. The system of claim 2 further comprising a controller (135) to track a status of experts (190) connected to the network (100).

17. A method for obtaining real-time information comprising:
transmitting a search request of a user to a host computer (139) from a portable handheld terminal (110);
receiving the search request by the host computer (139) that is connected to a network (100) with a live expert (190) logged thereon;
tracking the live expert (190) on the network (100) via a network controller (135);
assessing status of the live expert (190) by the host computer;
providing information related to the live expert (190) or received from the live expert (190) to the portable handheld terminal (110) for a real-time communication between the user and the live expert (190); the method being **characterized by**:
further notifying another expert (190) to connect to the network (100) based on an inference of the network controller (135).

18. The method of claim 17 further comprising contacting the live expert (190) by the user through the network (100).

19. The method of claim 17, further comprising displaying the contact information.

## Patentansprüche

1. System zum Bereitstellen von Echtzeitinformationen für einen Nutzer, das Folgendes umfasst:
Eingabemittel;
Mittel, die dafür geeignet sind, den Status von Experten (190) zu beurteilen, die in ein Netzwerk (100) eingeloggt sind;
Mittel, die dafür geeignet sind, Informationen bereitzustellen;
Mittel zum Beobachten der Experten (190) in dem Netzwerk (100) über einen Netzwerk-Controller (135);
wobei die Eingabemittel dafür geeignet sind, dass Nutzer über sie ein Suchtthema eingeben können, wobei die Eingabemittel dafür geeignet sind, mit einem Hostrechner (139) zu interagieren, der mit dem Netzwerk (100) verbunden ist, während die Experten (190) darin eingeloggt sind,
wobei die Mittel, die zum Bereitstellen von Informationen geeignet sind, dafür geeignet sind, Informationen über einen verfügbaren Status, die sich auf die Experten (190) beziehen oder von den Experten (190) kommend empfangen wurden, für den Nutzer bereitzustellen, um eine Echtzeitkommunikation zwischen diesen herzustellen;
**dadurch gekennzeichnet, dass** das System des Weiteren Folgendes umfasst:
Mittel zum Auffordern eines Experten (190) zum Verbinden mit dem Netzwerk (100) auf der Grundlage einer Inferenz des Netzwerk-Controllers (135).

2. System nach Anspruch 1, das des Weiteren Folgendes umfasst:
ein Nutzerdatenendgerät (110) mit einer Datenerfassungskomponente (370), die dafür geeignet ist, Daten zu einem Sachgebiet zu empfangen, und
den Hostrechner (139);
wobei das Nutzerdatenendgerät (110) dafür geeignet ist, mit dem Hostrechner (139) zu interagieren, und wobei der Hostrechner (139) dafür geeignet ist, sich mit dem Netzwerk (100) zu verbinden, wobei der Hostrechner (139) dafür geeignet ist, den Status eines Experten (190) auf dem Sachgebiet, der in das Netzwerk (100) eingeloggt ist, zu beurteilen, und dafür geeignet ist, Informationen, die sich auf den Experten (190) beziehen oder von dem Experten (190) kommend empfangen wurden, an den Nutzer bereitzustellen, um eine Echtzeitkommunikation zwischen dem Experten (190) und dem Nutzer herzustellen.

3. System nach Anspruch 2, wobei die Datenerfassungskomponente (370) ein Strichcode-Lesegerät umfasst, das dafür geeignet ist, ein Datenformular, das zu dem Sachgebiet in Beziehung steht, zu scannen.

4. System nach Anspruch 2, wobei die Datenerfassungskomponente (370) ein RFID-Lesegrät umfasst.

5. System nach Anspruch 2, wobei die Datenerfassungskomponente (370) eine Bildaufnahmekamera umfasst.

6. System nach Anspruch 2, wobei das Nutzerdatenendgerät (110) des Weiteren eine Strichcodedecodierungs-Abbildungsvorrichtung umfasst.

7. System nach Anspruch 2, wobei das Nutzerdatenendgerät (110) des Weiteren eine manuelle Eingabekomponente (350) umfasst.

8. System nach Anspruch 2, das des Weiteren Folgendes umfasst:
ein Eingabegerät, das dafür geeignet ist, Eingaben von dem Nutzer über ein Suchthema auf dem Sachgebiet entgegenzunehmen;
einen Prozessor (305), der dafür geeignet ist, eine Anfrage bezüglich Daten über das Suchthema zu erzeugen;
ein Sende- und Empfangsgerät, das dafür geeignet ist, die Anfrage zu senden und die Informationen von dem Hostrechner (139) zu empfangen; und
eine Anzeige (220), die dafür geeignet ist, dem Nutzer Daten anzuzeigen, die von dem Experten (190) kommend empfangen wurden.

9. System nach Anspruch 8, wobei das Eingabegerät eine Tastatur ist.

10. System nach Anspruch 8, wobei der Prozessor ein Computerprogramm enthält, das durch den Nutzer aktiviert wird.

11. System nach Anspruch 8, wobei das Eingabegerät ein Berührungsfeld (350) umfasst, über das der Nutzer ein Ersuchen oder eine Anfrage eingeben kann.

12. System nach Anspruch 8, wobei das Nutzerdatenendgerät (110) des Weiteren eine Browser-Anwendung umfasst, die dafür geeignet ist, Informationen bezüglich des Suchthemas anzuzeigen.

13. System nach Anspruch 12, wobei der Browser dafür geeignet ist, auf Java oder DOS basierende Anwendungen zu benutzen.

14. System nach Anspruch 8, wobei das Nutzerdatenendgerät (110) des Weiteren einen Drucker (355) umfasst.

15. System nach Anspruch 2, wobei das Nutzerdatenendgerät (110) eine Taste umfasst, die es dem Nutzer ermöglicht, eine Verbindungsanforderung an den Hostrechner (139) zu senden, um ein Suchprogramm zu starten.

16. System nach Anspruch 2, das des Weiteren einen Controller (135) umfasst, um einen Status von Experten (190) zu verfolgen, die mit dem Netzwerk (100) verbunden.

17. Verfahren zum Erhalten von Echtzeitinformationen, das Folgendes umfasst:
Senden einer Suchanforderung eines Nutzers von einem tragbaren handgehaltenen Endgerät (110) an einen Hostrechner (139);
Empfangen der Suchanforderung durch den Hostrechner (139), der mit einem Netzwerk (100) verbunden ist, während ein Experte (190) darin eingeloggt ist;
Beobachten des Experten (190) in dem Netzwerk (100) über einen Netzwerk-Controller (135);
Beurteilen des Status' des Experten (190) durch den Hostrechner;
Übermitteln von Informationen, die sich auf den Experten (190) beziehen oder von dem Experten (190) kommend empfangen wurden, an das tragbare handgehaltene Endgerät (110), um eine Echtzeitkommunikation zwischen dem Nutzer und dem Experten (190) herzustellen;
wobei das Verfahren **gekennzeichnet ist durch**:
zusätzliches Auffordern eines weiteren Experten (190) zum Verbinden mit dem Netzwerk (100) auf der Grundlage einer Inferenz des Netzwerk-Controllers (135).

18. Verfahren nach Anspruch 17, das des Weiteren das Kontaktieren des Experten (190) durch den Nutzer über das Netzwerk (100) umfasst.

19. Verfahren nach Anspruch 17, das des Weiteren das Anzeigen der Kontaktinformationen umfasst.

## Revendications

1. Système pour présenter des informations en temps réel à un utilisateur comprenant :
des moyens d'entrée ;
des moyens adaptés pour évaluer l'état d'experts en ligne (190) connectés sur un réseau (100) ;
des moyens adaptés pour fournir de l'information ;
des moyens pour suivre les experts en ligne (190) sur le réseau (100) à l'aide d'un contrôleur de réseau (135) ;
dans lequel les moyens d'entrée sont adaptés à la saisie d'un objet de recherche par des utilisateurs, les moyens d'entrée de données étant adaptés pour interagir avec un ordinateur (139) hôte connecté au réseau (100) sur lequel les experts en ligne (190) sont connectés,
dans lequel les moyens adaptés à la présentation de l'information sont adaptés à la présentation d'informations relatives aux experts (190) en ligne, ou reçues de ces derniers, concernant l'état de disponibilité envers l'utilisateur pour établir une communication en temps réel entre eux ; **caractérisé en ce que** le système comprend aussi :
des moyens pour notifier à un expert (190) de se connecter au réseau (100) sur la base d'une inférence du contrôleur de réseau (135),

2. Système de la revendication n° 1, comprenant en plus
un terminal de traitement de données (110) de l'utilisateur avec un composant pour la saisie de données (370) adapté à la réception de données relatives à un sujet, et l'ordinateur hôte (139) ;
dans lequel le terminal de traitement de données (110) de l'utilisateur est adapté pour interagir avec l'ordinateur hôte (139), et dans lequel l'ordinateur hôte (139) est adapté pour se connecter au réseau (100), l'ordinateur hôte (139) est adapté pour évaluer l'état sur le sujet d'un expert en ligne (190) qui est branché sur le réseau (100), et il est adapté pour présenter de l'information relative à l'expert (190), ou reçue de l'expert (190), à l'utilisateur pour une communication en temps réel entre l'expert (190) et l'utilisateur.

3. Système selon la revendication n° 2, avec le composant de saisie de données (370) comprenant un lecteur de code à barres adapté pour la lecture d'un formulaire de données concernant le sujet.

4. Système selon la revendication n° 2, avec le composant de saisie de données (370) comprenant un lecteur de cartes d'identification par radiofréquence.

5. Système selon la revendication n° 2, avec le composant de saisie de données (370) comprenant une caméra pour la saisie d'images.

6. Système selon la revendication n° 2, avec le terminal de traitement de données (110) de l'utilisateur comprenant en plus un système imageur de décodage de code à barres.

7. Système selon la revendication n° 2, avec le terminal de traitement de données (110) de l'utilisateur comprenant en plus un composant manuel d'entrée de données (350).

8. Système selon la revendication n° 2 comprenant en plus :
un dispositif d'entrée de données adapté pour accepter des entrées de l'utilisateur à propos d'un objet de recherche concernant le sujet ;
un processeur (305) adapté pour générer une requête relative à des données concernant l'objet de recherche ;
un émetteur-récepteur adapté pour transmettre la requête et recevoir l'information provenant de l'ordinateur hôte (139) ; et
un affichage (220) adapté pour afficher les données reçues de l'expert (190) à l'utilisateur.

9. Système selon la revendication n° 8, dans lequel le dispositif d'entrée de données est un clavier.

10. Système selon la revendication n° 8, dans lequel le processeur comprend un logiciel activé par l'utilisateur.

11. Système selon la revendication n° 8, dans lequel le dispositif d'entrée de données comprend un écran tactile (350) permettant à l'utilisateur d'entrer des requêtes.

12. Système selon la revendication n° 8, dans lequel le terminal de traitement de données (110) de l'utilisateur comprend en plus un navigateur adapté pour afficher de l'information relative à l'objet de recherche.

13. Système selon la revendication n° 12, le navigateur étant adapté à utiliser des applications basées sur java ou DOS.

14. Système selon la revendication n° 8, dans lequel le terminal de traitement de données (110) de l'utilisateur comprend en plus une imprimante (355).

15. Système selon la revendication n° 2, avec le terminal de traitement de données (110) de l'utilisateur comprenant un bouton permettant à l'utilisateur de transmettre une requête de lien à l'ordinateur hôte (139) pour lancer un programme de recherche.

16. Système selon la revendication n° 2 comprenant en plus un contrôleur (135) pour suivre l'état d'experts (190) branchés sur le réseau (100).

17. Procédé pour obtenir de l'information en temps réel comprenant :
la transmission d'une requête de recherche d'un utilisateur à un ordinateur hôte (139) à partir d'un terminal portatif (110) tenu à la main ;
la réception de la requête de recherche par l'ordinateur hôte (139) qui est connecté à un réseau (100) avec un expert en ligne (190) connecté sur le même réseau ; effectuer le suivi de l'expert en ligne (190) sur le réseau (100) à l'aide d'un contrôleur de réseau (135) ;
l'évaluation de l'état de l'expert en ligne (190) par l'ordinateur hôte ;
la présentation de l'information relative à l'expert en ligne (190) ou reçue de l'expert en ligne (190) au terminal portatif (110) à main pour une communication en temps réel entre l'utilisateur et l'expert en ligne (190) ; le procédé étant **caractérisé par** :
la notification en plus d'un autre expert (190) de se connecter au réseau (100) sur la base d'une inférence du contrôleur de réseau (135).

18. Procédé selon la revendication n° 17 comprenant en plus la possibilité pour l'utilisateur de contacter l'expert en ligne (190) sur le réseau (100).

19. Procédé selon la revendication n° 17 comprenant en plus l'affichage de l'information de contact.
